# EUROPEAN PATENT SPECIFICATION

(11) **EP 2 884 509 B1**
(45) Date of publication and mention of the grant of the patent: **28.08.2019**
(21) Application number: 13197486.7
(22) Date of filing: 16.12.2013
(51) Int. Cl.: H01G 2/10, H01G 4/015, H01G 4/224

(54) **Removing faults from a self-healing film capacitor**
Beseitigung von Störungen an einem selbstheilenden Schichtkondensator
Élimination de défaillances d'un condensateur à film autorégénérable

(43) Date of publication of application: 17.06.2015
(73) Proprietor: Siemens Aktiengesellschaft, 80333 München (DE)
(72) Inventor: Aarskog, Fredrik Gundersen, 7018 Trondheim (NO)

(56) References cited:
- WO-A1-2012/042835
- WO-A1-2013/011614
- CA-A1- 2 598 754
- US-A- 6 048 618
- US-A1- 2011 164 344

## Description

### Field of invention

The present invention relates to a method and to an arrangement for treating a capacitor, in particular self-healing film capacitor, for healing faults, wherein the capacitor is in particular to be used in a subsea application.

### Art Background

It may be known to operate a power grid at a sea ground or subsea. A power grid may comprise a adjustable speed drive (ASD) with one or more power cells which may have as a component a DC-link capacitor. Each power cell may contain a large DC-link capacitor. In a typical subsea application, smaller capacitors may be used for power supply and circuit boards. In a typical subsea application or subsea power grid, components (including the power cell in the subsea ASD) may be located in a pressure compensated oil volume, in particular contained within a vessel or enclosure. Pressure compensated means that the pressure inside the vessel is balanced to the ambient pressure. Thereby, the ambient pressure (outside the vessel or enclosure) may be very high (e.g. 50 bar to 400 bar) but the differential pressure (between inside and outside the vessel or enclosure) may be relatively low (e.g. 0.1 bar to 2.0 bar, or around 1 bar). Thus, the components of the ASD or other components of the subsea application may be exposed to the same ambient pressure as the water pressure surrounding the subsea power grid. A typical subsea application may take place at a depth of around 3000 m below sea level. Thus, at this depth, a pressure of approximately 300 bar prevails. Therefore, components to be used in subsea applications have to withstand this pressure and have to operate properly at this pressure.

Self-healing film capacitors are known and are used on circuit boards, for example because of their low dissipation factor. This makes them suitable for high current pulses. Such high current pulses may for example occur when capacitors are used in snubber circuits for semiconductor applications.

Film capacitors may however comprise faults which may hamper their operation. Therefore, according to a standard manufacturing process for a self-healing film capacitor, a self-healing step is performed. In particular, manufacturing stages may be roughly categorized as: metalizing, film slitting, winding, flattening (for flat windings) or cutting (for stacked windings) and then contact layer application ("shoopage"). After the above-mentioned process steps, the manufactured capacitors may have produced defects in the dielectric film or metallization, such as defects, weaknesses, pinholes and flaws. There could also be foreign or undesired particles trapped in between film layers or production inaccuracies in the dielectric film or metallization layer. Conventionally, a healing process is performed, in order to clear manufacturing faults.

Document WO 2012/042835 A1 (D1) discloses a film capacitor and a method for producing film capacitor wherein a metallized film having a plurality of divided films is formed and the metal film is electrically divided by slits, wherein a pre-healing step for eliminating the metal film at the periphery of insulating blemishes present on the metallized film is conducted by applying a voltage to the metallized film.

Document US 2011/0164344 A1 (D2) discloses a capacitor for application in high pressure environments, which has at least two electrodes and at least one electrically insulating film forming a dielectric between the electrodes, wherein the capacitor is unencapsulated and designed to allow a surrounding liquid to fill cavities of the capacitor.

Document US 6,048,618 (D3) discloses an impregnating compound for self-healing capacitors wherein insulating fluids are used for the impregnation of the wound coils of self-healing capacitors.

It has been observed that conventional healing processes for healing a capacitor, in particular a self-healing film capacitor, are not of sufficient accuracy or reliability under all conditions, in particular for preparing the capacitors for subsea applications.

Thus, there may be a need for a method and for an arrangement for treating a capacitor for healing faults, in particular a self-healing film capacitor for preparing the respective capacitor for operation under high pressure, such as in subsea applications.

### Summary of the Invention

This need may be met by the subject matter according to the independent claims. Advantageous embodiments of the present invention are described by the dependent claims.

According to an embodiment of the present invention, it is provided a method for treating a capacitor for healing faults according to claim 1, the method comprising applying a voltage between two electrodes of the capacitor to charge the capacitor at a start pressure and afterwards pressurizing a non-conductive fluid (i.e. a fluid that does not conduct an electrical current, i.e. an electrically insulating fluid, e.g. dielectric fluid) surrounding the capacitor to a target pressure while the voltage is applied.

The method may also be used for any circuits or circuit boards containing self healing film capacitors.

The capacitor may either be treated using the method before it is assembled into a subassembly, or after it is assembled (such as when it is mounted in a power cell or a circuit board).

The method may be performed in a manufacturing facility or at another location on earth, in particular above sea level such that the ambient air pressure is substantially the atmospheric air pressure. The capacitor may in particular be a self-healing film capacitor. In particular, the capacitor may comprise a film (e.g. comprising or made of polypropylene and/or polyester (PET) and/or polyethylene naphthalate (PEN) and/or Polyphenylene sulfide (PPS)) having a thickness between 0.5 µm and 20 µm, in particular between 2 µm and 10 µm, wherein on one side, a metal layer is deposited (in particular vacuum deposited, in particular sprayed) onto the film. The capacitor may have been manufactured by using the metalized film (or metal spray film) (in particular two of such films) and winding the film(s) up on a large wheel or on a large cylinder. Further on, sections may (or may not) be cut from the wound multiple layers of the film and the sections may be or may not be flattened or straightened in order to obtain a stack of layers being parallel to each other. During the coating of the film with metal, e.g. an alloy or a pure metal element, in particular aluminum deposit, partial local penetration of the film by the metal may occur. Thus, the raw manufactured capacitor may comprise faults, which may lead to an electrical connection between two metal layers on the film which usually are to be isolated from each other by the film.

For removing the faults within the capacitor, the voltage is applied between the two electrodes of the capacitor. Thereby, the application of the voltage is performed at a start pressure, either in air or in the non-conductive fluid surrounding the capacitor. Thereby, a healing process is initiated, which consists of energizing the capacitor such that self-healing events may occur. Thereby, the energizing (involving application of the voltage) may employ AC or DC voltage or both (in any order). The production faults or defects may lead to small short-circuits between the layers of the capacitor. Thereby, the short-circuits may clear or remove these defects by so-called self-healing events, which may thereby reduce the number of faults or defects.

After applying the voltage at the start pressure, a non-conductive fluid surrounding the capacitor is pressurized to a target pressure while the voltage is constantly being applied.

Thereby, the metal layers adjacent to each other are compressed so that their relative distance is reduced. Therefore, additional faults (which have not been shown at the start pressure) may arise and may be cleared, since small short-circuits may occur. The method however avoids that too many faults or defects occur at the very beginning of the healing procedure, since at the beginning, the voltage is applied at the start pressure which is much lower than the target pressure. One could for example imagine that the original polypropylene film is covered in an irregular manner with (vacuum) deposited metal, such as deposited aluminum (Al), such that aluminum particles reach up (or penetrate into the film) to different levels within the film. Depending on an applied pressure to the film metal layer structure there may be a pressure depending number of aluminum particles which reach through or almost through the film in the thickness direction. The higher the pressure, the more particles of the metal layer on the film may reach through the film causing a short-circuit with an adjacent metal layer. When increasing the pressure during the pressurizing of the non-conductive fluid, further defects may evolve in a pressure-dependent fashion and depending on the pressure, the evolved defects or faults may be cleared by the respective short-circuit, since the voltage is continuously applied. Thereby, the defects (which may eventually be present at the target pressure) may gradually be removed in a stepwise or continuous fashion by increasing the pressure of the non-conductive fluid, while the capacitor is charged due to the applied voltage.

By applying the voltage when the capacitor is at the start pressure, it can be avoided that too many short-circuits due to a too high number of faults occur, which would make self-healing not feasible, or which would even prohibit self-healing of the capacitor.

In particular, the inventor found that conventionally treated self-healing capacitors which were conventionally treated in a self-healing procedure had a very high failure rate when they have been energized at high ambient pressure. Thereby, the failure rate may increase with increasing capacities of the capacitors (since they are basically built of parallel connected smaller capacitors). For capacitors as large as 20 mF (and having a rated voltage of up to 1000 V), a failure rate of 80 - 100% is expected when the capacitors are treated in a conventional manner involving energizing the capacitors at high ambient pressure.

According to this embodiment of the present invention, the capacitor is however prepared so that it will not fail in pressurized environments, i.e. such that the capacitor is prepared to operate in pressurized environments, in particular in subsea applications.

The reason for the high failure rate of capacitors when they are energized at high ambient pressure may be that the production defects are still present in the capacitor even after the healing process is completed according to the conventional procedure. However, these defects do not influence the capacitor significantly when it operates at atmospheric pressure. When the capacitor is pressurized (in the non-conductive fluid), the metalized dielectric film is compressed. Any flaws, inaccuracies and foreign particles in between the metalized layers of dielectric film may then be forced closer to the adjacent or coinciding metalized layer. This may result in a reduction of the voltage withstand capabilities of the capacitor and may in some cases short-circuit the capacitor completely. If the capacitor is charged in this stage, it will most likely not heal, but suffer a catastrophic non-healing failure. Thus, according to this embodiment of the present invention, the capacitor is charged at the start pressure (i.e. a relatively low pressure) so that self-healing may still occur.

According to an embodiment of the present invention, the start pressure is between 0.1 bar and 40 bar, in particular between 1 bar and 10 bar, wherein in particular the target pressure is between 250 and 350 times as high as the start pressure.

Thus, the target pressure is for example a pressure prevailing at a depth between 400 m and 3500 m below sea level. Thus, by treating the capacitor according to this embodiment of the present invention, the capacitor flaws or defects may be reduced or removed such that the capacitor may be operated 400 m to 3500 m below sea level.

According to an embodiment of the present invention, the target pressure is between 50 bar and 1000 bar, in particular between 100 bar and 500 bar, further in particular between 250 bar and 350 bar. In some embodiment, a capacitor operable in a pressurized environment of at least 300 bar (pressure rating) may be desired. In order to obtain a safety margin, the capacitor may be required to withstand pressures higher than the pressure rating. Accordingly, the target pressure may for example be between 300 bar and 500 bar.

According to an embodiment of the present invention, the pressurizing the non-conductive fluid comprises increasing the pressure of the non-conductive fluid from the start pressure to the target pressure in a gradual manner, wherein in particular during the pressurizing the pressure of the non-conductive fluid increases at a rate of between 1 and 10,000 bar per minute, further in particular between 50 and 200 bar per minute, still further in particular around 100 bar per minute. The rate could be chosen such that all defects/faults showing up at a particular pressure (during increasing the pressure) could heal before the pressure is further increased. Thereby, a self healing event may take only one microsecond or even less.

The increase of the pressure may be in multiple steps or may be in a continuous fashion, in particular in accordance with a straight line. At every pressure value, short-circuits associated with this pressure value may occur resulting in self-healing processes. Thereby, the self-healing processes may have a relatively short time constant and may be completed for example in less than 1 micro second to 30 seconds or between 1 and 60 seconds. Thus, a relatively high pressure increase rate may be applied without hampering the self-healing process or the self-healing processes associated with the multiple pressures the capacitor is exposed to.

According to an embodiment of the present invention, the non-conductive fluid having the start pressure is in communication with an atmospheric air pressure.

The method may for example be performed in a factory on the surface of the earth, wherein the capacitor is placed in a vessel which internal space may be open to the ambient atmospheric air in the beginning of the method. Thereby, the method may be simplified.

According to an embodiment of the present invention, the voltage has a value between 0.5 and 1.5 of a rated voltage of the capacitor, in particular between 300 V and 1,500 V, wherein further in particular after applying the voltage an electric field between the two electrodes has a value between 20 and 500 V/µm, in particular between 100 and 200 V/µm.

A rated voltage of the capacitor may be a normal operational voltage of the capacitor, i.e. a voltage at which the capacitor may be operated continuously over prolonged time periods, such as between 1 day and several years.

The voltage may in particular not be that large that the capacitor is damaged or destroyed to a major degree.

According to an embodiment of the present invention, the capacitor has as a dielectric layer a film (in particular two films), in particular having a thickness between 1 µm and 20 µm, the film in particular comprising propylene, on which film(s) a metal, in particular comprising aluminum, is (vacuum) deposited on one side to be used as at least one of the electrodes.

Thereby, manufacturing of the capacitor may be simplified and conventionally available materials may be employed.

According to an embodiment of the present invention, the method for treating the capacitor further comprises maintaining the charged capacitor for a predetermined time interval, in particular between 1 seconds and 10 minutes, exposed to the target pressure to allow healing of faults (to complete).

Thereby, flaws or defects still remaining in the capacitor may completely be removed.

According to an embodiment of the present invention, the treatment method further comprises depressurizing the non-conductive fluid, in particular to the start pressure and discharging the capacitor, in any order. It may be depressurized and then discharged or it may be discharged and then depressurized.

After depressurizing the non-conductive fluid and discharging the capacitor, the capacitor may for example be released from the manufacturing facility and may be transported to an application site, wherein the capacitor may be placed within a vessel or (assembly) enclosure, in particular final assembly enclosure and may be lowered within the sea to the sea ground. During lowering the high pressure vessel containing the capacitor, the inside pressure may be increased to be equal the outside water pressure at the respective depth within the sea, e.g. by means of a pressure compensator providing pressure balancing between the inside pressure and ambient outside pressure. Such enclosure can be filled with a dielectric fluid, in particular a dielectric liquid.

Below the sea level or at subsea, the capacitor may then be used in a normal operation, for example for being a part of a power cell of an adjustable speed drive (ASD). Such ASD may comprise plural power cells arranged in a pressure compensated enclosure, and some or each power cell may comprise such capacitor. The ASD may be part of a subsea utility grid.

According to an embodiment of the present invention, the method is performed, while the capacitor is assembled in a power cell, the non-conductive fluid (e.g. a dielectric fluid, in particular a dielectric liquid, e.g. Castrol Brayco Micronic SBF and/or Envirotemp 200 Fluid and/or 3M Fluorinert and/or 3M Novec) in particular comprising an ester-based dielectric fluid, further in particular MIDEL 7131.

The MIDEL 7131 fluid is manufactured by M&I Materials Ltd., Manchester, United Kingdom. MIDEL 7131 conforms to IEC 61099 "Specifications for unused synthetic organic esters for electrical purposes". It is classified as a type T1, halogen-free pentaerythritol ester.

According to an embodiment of the present invention, the capacitor has a capacity between 1 pF and 100000 µF, in particular between 100 µF and 2500 µF. Thereby, the capacitor may be used in a typical DC-link of a power cell, in particular of a subsea utility grid.

According to an embodiment of the present invention, the method further comprises applying, in particular generated by at least one spring, opposing forces on the electrodes of the capacitor.

Thereby, delamination or the occurrence of wrinkle(s) in the film(s) of the capacitor may be avoided. The opposing forces may in particular be applied using a spring force, in order to be able to control the value of the opposing forces. Thereby, the integrity of the capacitor may be maintained or ensured.

According to an embodiment of the present invention, the opposing forces lead to a (directed) pressure having a value between 0.2 bar and 10 bar.

The (directed) pressure generated by the opposing forces may be thus much lower than the (hydrostatic) pressure corresponding to the target pressure of the non-conducting fluid. Thereby, the healing process may not be negatively affected.

It should be understood that features individually or in any combination disclosed, described, employed or provided for a method for treating a capacitor may also individually or in any combination applied, used for or employed for an arrangement for treating a capacitor according to an embodiment of the present invention and vice versa.

According to an embodiment of the present invention, it is provided an arrangement for treating a capacitor for healing faults according to claim 13, the arrangement comprising a vessel containing a non-conductive fluid for surrounding the capacitor when arranged within the vessel; a voltage source adapted to apply a voltage between two electrodes of the capacitor to charge the capacitor at a start pressure of the non-conductive fluid; and a pressurizing system adapted to pressurize the non-conductive fluid when surrounding the capacitor to a target pressure while the voltage is applied.

The capacitor may not be a part of the arrangement. The vessel may have a cylindrical shape. The capacitor may in particular be mounted or mountable in a frame which may be adapted to generate the opposing forces, in particular by a spring. Mounted within the frame, the capacitor may be placeable within the vessel. The pressuring system may comprise one or more compressors. The vessel may comprise one or more ports or connectors for connecting the compressors to the vessel for compressing the non-conductive fluid within the vessel. The arrangement may further comprise a control system which may be adapted to increase the pressure within the vessel in a desired manner, in particular in a gradual manner, for example in a stepwise manner or in a continuous, in particular linear, manner. Thereby, the control system may be adapted to select such a pressure that a healing method according to embodiments of the present invention may be carried out by the arrangement. Thus, increasing the pressure within the vessel may be slowly enough so that flaws or defects associated with a particular pressure may be healed.

According to an embodiment of the present invention, the vessel comprises metal walls and two electrical connectors to carry the voltage from the voltage source outside the vessel to the capacitor electrodes arranged within the vessel.

Thereby, the arrangement, in particular the voltage source may be simplified.

According to a further embodiment of the invention, a method of manufacturing a capacitor for use in a pressurized environment is provided. The method comprises the steps of providing a capacitor and of treating the capacitor with the above described method in any of the embodiments mentioned. A capacitor which is suitable for operation in a pressurized environment, in particular a subsea environment, may thus be produced. The capacitor may for example be suitable for operation inside a pressure compensated enclosure, in which the internal pressure is balanced to the external pressure. The capacitor is then located in a pressurized environment when the pressure compensated enclosure is installed at a subsea location close to the ocean floor. By treating the capacitor as described above, malfunction of the capacitor may be avoided when the capacitor is operated in such pressurized environment.

A further embodiment of the invention provides a capacitor for use in a pressurized environment, in particular in a subsea environment such as the above mentioned pressure compensated enclosure, wherein the capacitor is manufactured according to the above described method.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

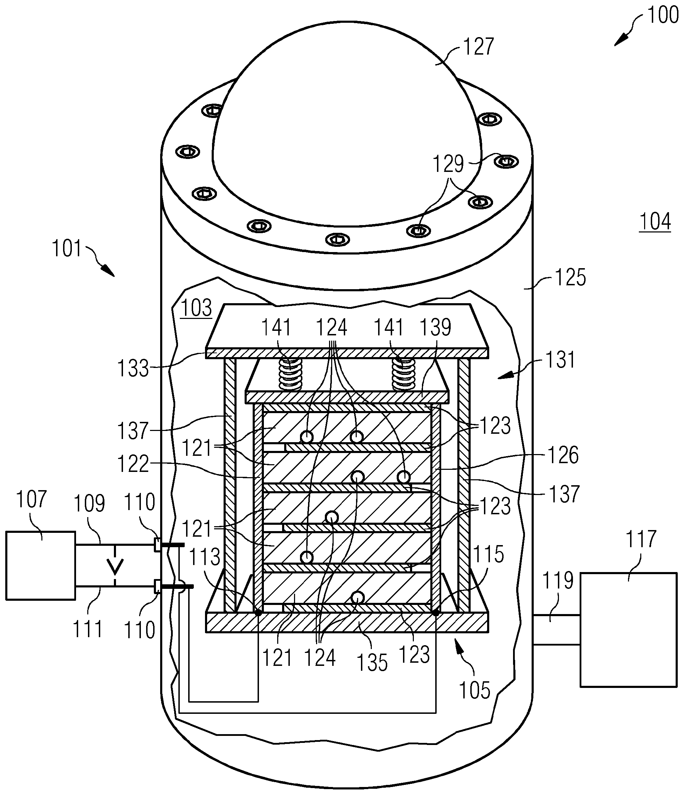

The figure schematically illustrates an arrangement for treating a capacitor for healing faults according to an embodiment of the present invention being adapted for carrying out a method for treating a capacitor for healing faults according to an embodiment of the present invention.

### Detailed Description

The illustration in the drawing may be in schematic form.

The arrangement 100 in the Figure comprises a vessel 101 containing a non-conductive fluid 103 which surrounds a capacitor 105 which is in the illustrated embodiment a self-healing film capacitor. The arrangement 100 further comprises a voltage source 107 which is adapted to generate a voltage V between terminals 109 and 111 and to apply the voltage (via connectors 110) to a first electrode 113 and a second electrode 115 of the capacitor 105, thereby charging the capacitor 105. The arrangement 100 further comprises a pressurizing system 117 which is connected via a port 119 to the interior of the vessel 101 in order to pressurize the non-conductive fluid 103 filled into the vessel 101 from a start pressure p1 (e.g. when the interior of the vessel 101 is in communication with the air (pressure) 104 outside the vessel) to a target pressure p2. The capacitor 105 comprises stacked dielectric layers 121 on which metal layers 123 are deposited. Thereby, the metal layers 123 are alternately connected either to a left conductor 122 to which the first electrode 113 is connected or to a right conductor 126 to which the second electrode 115 is connected. Thus, starting from the upper most layer 123 every other metal layer 123 is connected to the first electrode 113, but the metal layers in between two of the metal layers connected to electrode 113 are not connected to electrode 113. Conversely, starting from the second upper most layer 123 every other metal layer 123 is connected to the second electrode 115, but the metal layers in between two of the metal layers connected to electrode 115 are not connected to electrode 115.

During a method for treating the capacitor 105, the arrangement 100 applies a voltage V between the two electrodes 113, 115 of the capacitor to charge the capacitor at a start pressure p1. Thereby defect or faults 124 may be cleared or removed or reduced. Further on, using the pressurizing system 117, the non-conductive fluid 103 is pressurized, i.e. the pressure of the non-conductive fluid 103 is increased, while the fluid 103 surrounds the capacitor, to reach a target pressure p2, while the voltage V is being applied between the two electrodes 113, 115. Further defects or faults 124 may be cleared or removed or reduced at this increased pressure. Thereby, the pressurizing system 117 may continuously increase the pressure of the non-conductive fluid 103 within the vessel 101, causing continuously healing even further faults 124.

The vessel 101 comprises metal walls 125 having a cylindrical shape and which are closed by a cap 127 using screws 129. The vessel 101 may withstand a pressure at a depth of around 3000 m below sea level of around 300 bar.

In the illustrated example the capacitor 105 is mounted in a frame 131 comprising a fixed stiff plate 133 and a fixed stiff plane plate 135 as well as connecting bars 137 as well as a movable stiff plane plate 139 which presses against the upper side of the capacitor 105. Furthermore, the fixed plate 135 (a not indicated insulating layer between 135 and 113 electrically disconnects the electrode 113 from the spring 141) supports the bottom side of the capacitor. Springs 141 are placed between the fixed stiff plate 133 and the movable plate 139 (a not indicated insulating layer between 139 and 115 electrically disconnects the electrode 115 from the plate 139) to apply a spring force in opposite directions between the movable plate 139 and the fixed plate 135 in order to compress the stack of dielectric films and metal layers 121, 123. The frame 131 thereby mounts the capacitor 105 such that delamination or evolvement of wrinkles is reduced or even prohibited or avoided.

In other embodiments of the present invention, during the healing process, the capacitor 105 may not be mounted in a frame 131 but may be supported without applying directed pressure on opposing direction on electrodes of the capacitor.

According to an embodiment of the present invention, a pressure healing process may consist of the following step or may comprise the following steps:
1. Energizing the capacitor with either AC or DC voltage. Thereby, a DC voltage is recommended for energizing and thereby charging the capacitor. The applied voltage V should be high enough that self-healing events may occur, wherein the exact voltage may depend on the capacitor design, such as dielectric film material and voltage rating, etc. A DC voltage equal to the rated capacitor voltage has thereby successfully been tested. Healing in atmospheric pressure is performed at around 1.5 times the rated voltage of the capacitor.
2. The capacitor is placed into the fluid filled pressure vessel 101 and pressurized gradually to the design or target pressure (plus desired pressure safety margin) while the capacitor is still energized, i.e. the voltage V is still continuously being applied.
   A pressure gradient of 100 bar/minute has successfully been tested. Pressure gradients of less than 100 bar/min may be no problem. Pressure gradients higher than 100 bar/min is not expected to be a problem due to the fact that the self-healing events have a relative short time constant.
3. The desired pressure is maintained for some time, while the voltage is still applied. Times between 0 and 10 minutes have successfully been tested. It is also possible to maintain the desired pressure or target pressure for longer than 10 minutes but this may not be necessary.
4. The capacitor is depressurized and discharged. Hereby, the order of the steps is not important.

The pressure healing process according to embodiments of the present invention may be performed as a part of the capacitor manufacturing process or it may be performed after the capacitor has been assembled into an assembly, such as a power cell. By first energizing the capacitor (or applying the voltage), it may contain enough energy to clear any internal faults that are present at atmospheric or relatively low pressure, i.e. the start pressure, or to clear any faults that appear over time.

By the production inaccuracies, the flaws may be of unequal size and shape. When the pressurization occurs gradually, the inaccuracies and flaws may occur to spread out in time as the capacitor is compressed. Since the capacitor is energized, it may contain energy to clear the flaw/inaccuracy as it occurs, due to short-circuits.

The performance of the method according to an embodiment of the present invention has been tested and compared to a conventional method. Thereby, ten capacitor samples were not treated with the procedure according to an embodiment of the present invention but were first pressurized and then an attempt was made to charge them to the rated voltage while at the high ambient pressure (200 - 350 bar). Two out of these 10 capacitor samples failed catastrophically during charging.

On the contrary, according to an embodiment of the present invention, 50 capacitor samples of different designs (125 µF - 1670 µF) were treated according to an embodiment of a method for treating a capacitor for healing faults. None of these samples failed afterwards when charging them to the rated voltage. Several different design pressures had been tested successfully: from 50 bar up to 530 bar, pressurization rates have been in the order of 100 bar/min.

Several different capacitor designs were tested successfully: voltage rating ranging from 375 V up to 1300 V (DC), capacitance ranging from 125 µF up to 1670 µF.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method for treating a capacitor (105) for healing faults (124), the method comprising:
applying a voltage (V) between two electrodes (113, 115) of the capacitor (105) to charge the capacitor at a start pressure (p1) being between 0.1 bar and 40 bar, wherein the voltage (V) has a value between 0.5 and 1.5 of a rated voltage of the capacitor; and afterwards
pressurizing a non-conductive fluid (103) surrounding the capacitor (105) to a target pressure (p2) while the voltage (V) is applied, wherein the target pressure (p2) is between 250 and 350 times as high as the start pressure.

2. Method according to claim 1, wherein the start pressure (p1) is between 1 bar and 10 bar.

3. Method according to claim 1 or 2, wherein the target pressure (p2) is between 50 bar and 1000 bar, in particular between 100 bar and 500 bar, further in particular between 250 bar and 350 bar.

4. Method according to one of the preceding claims, wherein the pressurizing the non-conductive fluid comprises increasing the pressure of the non-conductive fluid from the start pressure (p1) to the target pressure (p2) in a gradual manner,
wherein in particular during the pressurizing the pressure of the non-conductive fluid increases at a rate of between 10 and 1000 bar per minute, further in particular between 50 and 200 bar per minute, still further in particular around 100 bar per minute.

5. Method according to one of the preceding claims, the non-conductive fluid (103), which has the start pressure, is contained in a vessel (101) whose interior is in communication with an atmospheric air pressure (104).

6. Method according to one of the preceding claims, wherein the voltage (V) has a value between 300 V and 1500 V, wherein in particular after applying the voltage an electric field between the two electrodes has a value between 20 and 500 V/µm, in particular between 100 and 200 V/µm.

7. Method according to one of the preceding claims, wherein the capacitor (105) has as a dielectric layer a film (121), in particular having a thickness between 1 µm and 20 µm, the film in particular comprising propylene, on which film a metal (123), in particular comprising aluminum, is deposited, in particular vacuum deposited on one side to be used as at least one of the electrodes.

8. Method according to one of the preceding claims, further comprising:
maintaining the charged capacitor for a predetermined time interval, in particular between 0 seconds and 10 minutes, exposed to the target pressure (p2) to allow healing of faults.

9. Method according to one of the preceding claims, further comprising:
depressurizing the non-conductive fluid (103), in particular to the start pressure (p1); and
discharging the capacitor (105).

10. Method according to one of the preceding claims, wherein the method is performed while the capacitor is assembled in a power cell, the non-conductive fluid (103) in particular comprising a dielectric liquid, further in particular an ester-based dielectric liquid such as MIDEL 7131.

11. Method according to one of the preceding claims, wherein the capacitor (105) has a capacity between 1 pF and 100000 µF.

12. Method according to one of the preceding claims, further comprising:
applying, in particular generated by at least one spring (141), opposing forces on the electrodes (113,115) of the capacitor (103).

13. Arrangement (100) for treating a capacitor (105) for healing faults (124), the arrangement comprising:
a vessel (101) containing a non-conductive fluid (103) for surrounding the capacitor (105) when arranged within the vessel (101);
a voltage source (107) adapted to apply a voltage (V) between two electrodes (113,115) of the capacitor (105) to charge the capacitor at a start pressure (p1) of the non-conductive fluid (103); and
a pressurizing system (117) adapted to pressurize the non-conductive fluid (103) when surrounding the capacitor (105) to a target pressure (p2) while the voltage (V) is applied,
wherein the start pressure is between 0.1 bar and 40 bar, wherein the target pressure (p2) is between 250 and 350 times as high as the start pressure,
wherein the voltage (V) has a value between 0.5 and 1.5 of a rated voltage of the capacitor.

14. Arrangement according to claim 13, wherein the vessel (101) comprises metal walls (125) and two electrical connectors (110) to carry the voltage from the voltage source (107) outside the vessel (101) to the capacitor electrodes (113, 115) arranged within the vessel (101).

15. Method of manufacturing a capacitor for use in a pressurized environment, comprising the steps of
- providing a capacitor;
- treating the capacitor with the method according to any of claims 1-12.

16. Capacitor for use in a pressurized environment, in particular for use in a subsea environment, **characterized in that** the capacitor is manufactured according to the method of claim 15.

## Patentansprüche

1. Verfahren zur Behandlung eines Kondensators (105) zum Beseitigen von Störungen (124), wobei das Verfahren Folgendes umfasst:
Anlegen einer Spannung (V) zwischen zwei Elektroden (113, 115) des Kondensators (105), um den Kondensator bei einem Startdruck (p1), der zwischen 0,1 bar und 40 bar beträgt, zu laden, wobei die Spannung (V) einen Wert zwischen 0,5 und 1,5 einer Nennspannung des Kondensators hat, und danach
Beaufschlagen eines den Kondensator (105) umgebenden, nicht leitenden Fluids (103) mit einem Solldruck (p2), während die Spannung (V) angelegt wird, wobei der Solldruck (p2) zwischen 250 und 350 mal so hoch ist wie der Startdruck.

2. Verfahren nach Anspruch 1, wobei der Startdruck (p1) zwischen 1 bar und 10 bar beträgt.

3. Verfahren nach Anspruch 1 oder 2, wobei der Solldruck (p2) zwischen 50 bar und 1000 bar, insbesondere zwischen 100 bar und 500 bar, weiter insbesondere zwischen 250 und 350 beträgt.

4. Verfahren nach einem der vorhergehenden Ansprüche, wobei das Druckbeaufschlagen des nicht leitenden Fluids das schrittweise Erhöhen des Drucks des nicht leitenden Fluids von dem Startdruck (p1) auf den Solldruck (p2) umfasst,
wobei insbesondere während des Druckbeaufschlagens der Druck des nicht leitenden Fluids mit einer Rate von zwischen 10 und 1000 bar pro Minute, weiter insbesondere zwischen 50 bar und 200 bar, noch weiter insbesondere zirka 100 bar pro Minute zunimmt.

5. Verfahren nach einem der vorhergehenden Ansprüche, wobei das nicht leitende Fluid (103), das den Startdruck aufweist, in einem Gefäß (101) enthalten ist, dessen Inneres mit einem atmosphärischen Luftdruck (104) in Verbindung steht.

6. Verfahren nach einem der vorhergehenden Ansprüche, wobei die Spannung (V) einen Wert zwischen 300 V und 1500 V hat, wobei insbesondere nach Anlegen der Spannung ein elektrisches Feld zwischen den zwei Elektroden einen Wert zwischen 20 und 500 V/pm, insbesondere zwischen 100 und 200 V/pm hat.

7. Verfahren nach einem der vorhergehenden Ansprüche, wobei der Kondensator (105) als dielektrische Schicht einen Film (121), insbesondere mit einer Dicke zwischen 1 µm und 20 µm, aufweist, wobei der Film insbesondere Propylen umfasst, wobei auf dem Film ein Metall (123), das insbesondere Aluminium umfasst, abgelagert, insbesondere im Vakuum auf eine Seite aufgedampft wird, um als mindestens eine der Elektroden verwendet zu werden.

8. Verfahren nach einem der vorhergehenden Ansprüche, ferner umfassend:
Aussetzen des geladenen Kondensators dem Solldruck (p2) für ein vorbestimmtes Zeitintervall, insbesondere zwischen 0 und 10 Minuten, um die Beseitigung von Störungen zu ermöglichen.

9. Verfahren nach einem der vorhergehenden Ansprüche, ferner umfassend:
Druckentlastung des nicht leitenden Fluids (103), insbesondere auf den Startdruck (p1) und
Entladen des Kondensators (105).

10. Verfahren nach einem der vorhergehenden Ansprüche, wobei das Verfahren ausgeführt wird, während der Kondensator in eine Stromzelle eingebaut wird, wobei das nicht leitende Fluid (103) insbesondere eine dielektrische Flüssigkeit, weiterhin insbesondere eine dielektrische Flüssigkeit auf Ester-Basis wie MIDEL 7131 umfasst.

11. Verfahren nach einem der vorhergehenden Ansprüche, wobei der Kondensator (105) eine Kapazität zwischen 1 pF und 100000 µF hat.

12. Verfahren nach einem der vorhergehenden Ansprüche, ferner umfassend:
Aufbringen von insbesondere durch mindestens eine Feder (141) erzeugten entgegengesetzt gerichteten Kräften auf die Elektroden (113, 115) des Kondensators (103).

13. Anordnung (100) zur Behandlung eines Kondensators (105) zum Beseitigen von Störungen (124), wobei die Anordnung Folgendes umfasst:
ein Gefäß (101), das ein nicht leitendes Fluid (103) zum Umgeben des Kondensators (105) enthält, wenn dieser innerhalb des Gefäßes (101) angeordnet ist,
eine Spannungsquelle (107), die dazu ausgebildet ist, eine Spannung (V) zwischen zwei Elektroden (113, 115) des Kondensators (105) anzulegen, um den Kondensator bei einem Startdruck (p1) des nicht leitenden Fluids (103) zu laden,
ein Druckbeaufschlagungssystem (117), das dazu ausgebildet ist, das nicht leitende Fluid (103), wenn es den Kondensator (105) umgibt, bis zu einem Solldruck (p2) mit Druck zu beaufschlagen, während die Spannung (V) angelegt wird,
wobei der Startdruck zwischen 0,1 bar und 40 bar beträgt, wobei der Solldruck (p2) zwischen 250 und 350 mal so hoch ist wie der Startdruck,
wobei die Spannung (V) einen Wert zwischen 0,5 und 1,5 einer Nennspannung des Kondensators hat.

14. Anordnung nach Anspruch 13, wobei das Gefäß (101) Metallwände (125) und zwei elektrische Verbinder (110) umfasst, um die Spannung von der Spannungsquelle (107) außerhalb des Gefäßes (101) zu den innerhalb des Gefäßes (101) angeordneten Kondensatorelektroden (113, 115) zu transportieren.

15. Verfahren zur Herstellung eines Kondensators für die Verwendung in einer unter Druck stehenden Umgebung, das die folgenden Schritte umfasst:
- Bereitstellen eines Kondensators,
- Behandeln des Kondensators mit dem Verfahren nach einem der Ansprüche 1 bis 12.

16. Kondensator für die Verwendung in einer unter Druck stehenden Umgebung, insbesondere für die Verwendung in einer Unterwasserumgebung, **dadurch gekennzeichnet, dass** der Kondensator gemäß dem Verfahren nach Anspruch 15 hergestellt wird.

## Revendications

1. Procédé pour traiter un condensateur (105) quant à des défaillances de régénération (124), le procédé comprenant :
l'application d'une tension (V) entre deux électrodes (113, 115) du condensateur (105) pour charger le condensateur à une pression de départ (p1) qui se situe entre 0,1 bar et 40 bars, dans lequel la tension (V) présente une valeur qui se situe entre 0,5 et 1,5 fois une tension nominale du condensateur ; et ensuite :
la pressurisation d'un fluide non conducteur (103) qui entoure le condensateur (105) jusqu'à une pression cible (p2) tandis que la tension (V) est appliquée, dans lequel la pression cible (p2) se situe entre 250 et 350 fois la pression de départ.

2. Procédé selon la revendication 1, dans lequel la pression de départ (p1) se situe entre 1 bar et 10 bars.

3. Procédé selon la revendication 1 ou 2, dans lequel la pression cible (p2) se situe entre 50 bars et 1000 bars, en particulier entre 100 bars et 500 bars, de façon davantage particulière entre 250 bars et 350 bars.

4. Procédé selon l'une des revendications précédentes, dans lequel :
la pressurisation du fluide non conducteur comprend l'augmentation de la pression du fluide non conducteur depuis la pression de départ (p1) jusqu'à la pression cible (p2) de façon progressive ; dans lequel :
en particulier, pendant la pressurisation, la pression du fluide non conducteur augmente à une vitesse qui se situe entre 10 et 1000 bars par minute, de façon davantage particulière entre 50 et 200 bars par minute, de façon encore davantage particulière, au voisinage de 100 bars par minute.

5. Procédé selon l'une des revendications précédentes, dans lequel le fluide non conducteur (103), qui présente la pression de départ, est contenu à l'intérieur d'une enceinte (101) dont l'intérieur est en communication avec la pression atmosphérique (104).

6. Procédé selon l'une des revendications précédentes, dans lequel la tension (V) présente une valeur qui se situe entre 300 V et 1500 V, dans lequel, en particulier, après l'application de la tension, un champ électrique entre les deux électrodes présente une valeur qui se situe entre 20 et 500 V/pm, en particulier entre 100 et 200 V/pm.

7. Procédé selon l'une des revendications précédentes, dans lequel le condensateur (105) comporte, en tant que couche diélectrique, un film (121), en particulier qui présente une épaisseur qui se situe entre 1 µm et 20 µm, le film comprenant en particulier du propylène, film sur lequel un métal (123), en particulier comprenant de l'aluminium, est déposé, en particulier est déposé sous vide sur un côté qui doit être utilisé en tant qu'au moins l'une des électrodes.

8. Procédé selon l'une des revendications précédentes, comprenant en outre :
le maintien du condensateur chargé pendant un intervalle temporel prédéterminé, en particulier entre 0 seconde et 10 minutes, dans un état d'exposition à la pression cible (p2) pour permettre la régénération de défaillances.

9. Procédé selon l'une des revendications précédentes, comprenant en outre :
la dépressurisation du fluide non conducteur (103), en particulier jusqu'à la pression de départ (p1) ; et
la décharge du condensateur (105).

10. Procédé selon l'une des revendications précédentes, dans lequel le procédé est réalisé tandis que le condensateur est assemblé dans une cellule de puissance, le fluide non conducteur (103) comprenant en particulier un liquide diélectrique, de façon davantage particulière un liquide diélectrique à base d'ester tel que MIDEL 7131.

11. Procédé selon l'une des revendications précédentes, dans lequel le condensateur (105) présente une valeur de capacité entre 1 pF et 100000 µF.

12. Procédé selon l'une des revendications précédentes, comprenant en outre :
l'application de forces opposées sur les électrodes (113, 115) du condensateur (103), lesquelles forces sont en particulier générées par au moins un ressort (141).

13. Agencement (100) pour traiter un condensateur (105) quant à des défaillances de régénération (124), l'agencement comprenant :
une enceinte (101) qui contient un fluide non conducteur (103) de sorte qu'il entoure le condensateur (105) lorsque celui-ci est agencé à l'intérieur de l'enceinte (101) ;
une source de tension (107) qui est adaptée pour appliquer une tension (V) entre deux électrodes (113, 115) du condensateur (105) pour charger le condensateur à une pression de départ (p1) du fluide non conducteur (103) ; et
un système de pressurisation (117) qui est adapté pour pressuriser le fluide non conducteur (103) lorsqu'il entoure le condensateur (105) jusqu'à une pression cible (p2) tandis que la tension (V) est appliquée ; dans lequel :
la pression de départ se situe entre 0,1 bar et 40 bars ;
dans lequel :
la pression cible (p2) se situe entre 250 et 350 fois la pression de départ ; et dans lequel :
la tension (V) présente une valeur qui se situe entre 0,5 et 1,5 fois une tension nominale du condensateur.

14. Agencement selon la revendication 13, dans lequel l'enceinte (101) comprend des parois métalliques (125) et deux connecteurs électriques (110) pour transporter la tension depuis la source de tension (107) à l'extérieur de l'enceinte (101) jusqu'aux électrodes de condensateur (113, 115) qui sont agencées à l'intérieur de l'enceinte (101).

15. Procédé de fabrication d'un condensateur destiné à être utilisé dans un environnement pressurisé, comprenant les étapes constituées par :
- la fourniture d'un condensateur ; et
- le traitement du condensateur à l'aide du procédé selon l'une quelconque des revendications 1 à 12.

16. Condensateur destiné à être utilisé dans un environnement pressurisé, en particulier destiné à être utilisé dans un environnement sous-marin, **caractérisé en ce que** le condensateur est fabriqué conformément au procédé selon la revendication 15.
